# FASCICULE DE BREVET EUROPEEN

(11) **EP 1 456 923 B1**
(45) Date de publication et mention de la délivrance du brevet: **12.10.2005**
(21) Numéro de dépôt: 02804928.6
(22) Date de dépôt: 16.12.2002
(51) Int. Cl.: H02G 1/08

(54) **PROCEDE D'INSTALLATION D'UN CABLE DE FORTES OU MOYENNES PUISSANCES DANS LE SOL**
VERFAHREN ZUM INSTALLIEREN EINES HOCH- ODER MITTELLEISTUNGSKABELS IM BODEN
METHOD FOR INSTALLING A HIGH OR MEDIUM POWER CABLE IN THE GROUND

(30) Priorité: 17.12.2001 FR 0116327
(43) Date de publication de la demande: 15.09.2004
(73) Titulaire: ENTREPRISE HYDRAULIQUE ET TRAVAUX PUBLICS - EHTP, 13103 Saint Etienne du Gres (FR); Plumettaz, 1880 Bex (CH)
(72) Inventeur: TRICHARD, Claude, F-85400 Luçon (FR); CENSIER, Bernard, F-69003 Lyon (FR); POZZATI, Giovanni, I-21057 OLGIATE OLOUA (VA) (IT); PERELLE, Jo[l, F-34000 Montpellier (FR); PLUMETTAZ, Gérard, CH-1880 BEX (CH)
(74) Mandataire: Guerre, Dominique
(86) Numéro de dépôt international: PCT/FR2002/004373
(87) Numéro de publication internationale: WO 2003/052894

(56) Documents cités:
- GB-A- 2 190 457
- US-A- 4 048 807
- US-A- 4 232 981
- US-A- 4 941 774
- US-A- 5 433 277
- US-A- 5 967 495

## Description

La présente invention se rapporte au domaine technique des installations de câbles, par exemple à fibres optiques ou autres, à l'intérieur de conduits d'installation enterrés et/ou immergés. Sous le terme "câbles", il faut aussi comprendre des tubes ou autres permettant de transporter de l'énergie, des fluides et des signaux électriques, lumineux ou autres. Le terme câble concerne également des câbles électriques de basses, moyennes et hautes puissances, monophasés ou triphasés, supportant une tension électrique par exemple supérieure ou égale à 1 000 volts et présentant des poids linéaires relativement élevés, par exemple de l'ordre de 8 à 35 kg/m.

On connaît différentes méthodes pour installer des câbles, hors câbles électriques de forte ou moyenne puissance, à l'intérieur de conduits. Ces méthodes sont définies ci-après.

Par "tirage", on entend que le câble est attaché par son extrémité à une élingue déjà installée dans le conduit. Cette élingue est accrochée au tambour d'un treuil qui enroule cette dernière et permet l'installation de câble dans le conduit, par glissement dudit câble à l'intérieur dudit conduit.

Par "tirage-poussage", on entend un tirage et un poussage simultanés avec l'utilisation de moyens permettant de pousser le câble à son entrée dans le conduit, et ce pour diminuer les efforts de traction sur la tête de câble et pour augmenter la distance d'installation. Des moyens d'entraînement du câble vers la mi-parcours peuvent également être prévus.

Par "soufflage", on entend que le conduit d'installation est mis en pression,à l'aide d'un fluide, entre les moyens d'alimentation en câble et un furet étanche accroché à la tête du câble. La pression régnant à l'intérieur du conduit permet ainsi de déplacer le furet, tirant sur la tête de câble. La mise sous pression se fait généralement avec de l'air.

Par "soufflage-poussage", on entend l'utilisation de moyens permettant de pousser le câble à son entrée dans le conduit, associés aux moyens mis en oeuvre dans la méthode dite par "soufflage". Là encore, on obtient une augmentation de la distance d'installation du câble.

Par "flottage-poussage" et/ou "portage-poussage", on entend une technique dans laquelle un fluide, gaz ou liquide, est injecté dans le conduit, et c'est le frottement du fluide sur la gaine extérieure du câble qui exerce la force de traction. Dans cette technique d'installation, la pression statique de l'air ou fluide à l'intérieur du conduit a pour effet de repousser le câble hors du conduit, ce qui impose l'utilisation de moyens pour d'abord compenser cette force et dans un deuxième temps pousser ledit câble à son introduction dans le conduit d'installation.

Le fluide utilisé naturellement pour le "portage", est de l'air, disponible en grande quantité sur un chantier, ou l'eau.

Dans la suite du texte, le terme "densité" désigne le rapport entre la masse volumique du câble et la masse volumique de l'eau. Il en est de même lorsque l'on parle de densité d'un liquide de portage ou liquide porteur. Par définition, la masse volumique de l'eau est égale à 1.

On connaît ainsi, en particulier dans le domaine des télécommunications où des câbles de fibres optiques sont installés, un procédé appelé portage-poussage,selon lequel on installe des câbles de fibres optiques dans des conduits d'installation pré-installés dans le sol. Cette technologie semble difficilement transposable à des câbles électriques dont les caractéristiques en poids par une unité de longueur et densité conduisent à des frottements relativement élevés et par conséquent à diminuer sensiblement les distances d'installation.

La présente invention concerne plus spécifiquement l'installation de câbles électriques supportant des tensions électriques supérieures à 1 000 volts et susceptibles de véhiculer des puissances électriques moyennes ou élevées, monophasées ou triphasées. De tels câbles, connus en tant que tels, ont des éléments monophasés entourés d'une gaine en PEHD, et présentent un poids par unité de longueur supérieur à 0,5kg/m.

Les câbles électriques peuvent également être rassemblés par trois lorsque la puissance est transportée sur trois phases.

Du fait de leur poids par unité de longueur élevé, ces câbles ou assemblages de câbles ne sont pas disposés dans des conduits d'installation sur de longues distances comme c'est le cas, par exemple pour les câbles de fibres optiques.

En effet, l'introduction de tels câbles électriques (moyennes et fortes puissances) généreraient des forces de frottements importantes avec le conduit d'installation. Ces forces de frottement élevées conduiraient à une diminution substantielle de la distance d'installation, avec des forces de poussages, et le cas échéant de tractions mises en oeuvre, inacceptables.

Ces forces trop importantes, mises en oeuvre lors de l'installation d'un câble, peuvent conduire à une détérioration de la gaine protectrice du câble et du conduit d'installation lui-même.

Dans le cas d'un frottement important entre deux matériaux, du type PEHD ou PVC ou entre PEHD et PVC, on peut constater un échauffement allant jusqu'à un ramollissement ou une fusion desdits matériaux.

En effet, l'utilisation des câbles électriques comportant une gaine extérieure en PEHD ou en PVC qui seraient amenés à être installés dans un conduit également en PEHD ou en PVC conduirait à un frottement susceptible de détériorer, de façon irréversible, la gaine dudit câble électrique.

Les câbles électriques sont en général directement enfouis dans le sol grâce à un procédé d'enfouissement consistant à ouvrir une tranchée, déposer les câbles dans la tranchée et remblayer la tranchée.

De telles opérations de génie civil et en particulier le remblaiement utilisant par exemple les matériaux évacués lors de l'ouverture de la tranchée peuvent conduire à blesser les gaines extérieures des câbles électriques. Des défauts d'isolation électrique ou des amorces de dégradation en sont les principales conséquences. Dans un tel cas de figure, il est indispensable de pourvoir les câbles électriques d'une gaine extérieure renforcée ou adaptée pour constituer une protection mécanique et/ou électrique.

L'introduction de câbles électriques de moyennes ou fortes puissances dans des conduits d'installation, suppose également de disposer notamment de moyens de poussage adéquats, susceptibles de développer une force de poussage suffisante. Les moyens de poussage connus présentent en général des organes de poussage enserrant le câble afin de le pousser dans le conduit d'installation. La mise en oeuvre d'une force de poussage élevée, suppose une bonne prise des organes de poussage sur le câble, et en particulier sur sa gaine extérieure. Une bonne prise n'est possible dans ces conditions qu'avec des dents ou protubérances en saillie, venant s'engager dans le matériau constitutif de la gaine. Cette dernière devra présenter des empreintes de taille suffisamment faible pour ne pas dégrader les performances du câble, ce qui est difficile à garantir avec des efforts de poussage importants.

A l'inverse, l'utilisation d'organes de poussage présentant une surface lisse en contact avec le câble conduirait, de par l'effort de poussage important à fournir, à un patinage, et par conséquent, à un échauffement de la gaine conduisant d'abord une diminution de la vitesse d'avancée ou d'installation du câble dans le conduit et ensuite à la destruction de la gaine par fusion et arrachement de la gaine.

Un procédé d'installation d'un câble dans un conduit d'installation du type mentionné ci-dessus est décrit dans les documents US-A-4 941 774, US-A-5 967 495 et GB-A-2 190 457.

Le but de la présente invention vise à s'affranchir des inconvénients des techniques d'enfouissement ou des limitations liées aux techniques d'installation connues pour des câbles électriques dans un conduit d'installation.

Un autre but vise à réduire sensiblement les frais et les coûts d'installation de tels câbles électriques.

Les buts assignés à la présente invention sont atteints à l'aide d'un procédé pour disposer des câbles électriques dans le sol conformément à la revendication 1 et d'un dispositif permettant de mettre en oeuvre ledit procédé conformément à la revendication 7.

Selon l'invention, le procédé consiste à installer au moins un câble électrique de fortes ou moyennes puissances dans un conduit d'installation existant ou préalablement disposé dans le sol, d'une part en poussant le câble, et d'autre part en injectant de l'eau sous pression dans le conduit d'installation, de manière à utiliser l'eau comme fluide de portage et d'évacuation de l'énergie thermique résultant des forces de frottement entre ledit câble et le conduit d'installation.

Selon l'invention, le procédé consiste à creuser une tranchée pour disposer des câbles électriques dans le sol, à évacuer les matériaux issus de la tranchée vers un dispositif de traitement, par exemple, par concassage, à disposer au moins un conduit d'installation dans la tranchée à remblayer la tranchée avec les matériaux traités et à installer dans ledit conduit d'installation, au moins un câble électrique de moyenne ou forte puissance, d'une part en le poussant, et d'autre part, en injectant de l'eau sous pression dans le conduit d'installation de manière à utiliser l'eau comme fluide de portage et d'évacuation de l'énergie thermique résultant des frottements entre le câble et le conduit d'installation.

Selon l'invention, les moyens de poussage comprennent au moins une unité de poussage comportant deux chaînes superposées tournant en sens inverse et enserrant le câble électrique, de manière à le pousser dans le conduit d'installation.

Selon un mode de mise en oeuvre, le procédé conforme à l'invention consiste à contrôler la température du fluide de portage.

Selon un mode de mise en oeuvre, le procédé conforme à l'invention consiste à piloter des moyens de refroidissement du fluide de portage en fonction du résultat du contrôle de la température dudit fluide.

Selon un mode de mise en oeuvre, le procédé conforme à l'invention consiste à piloter la vitesse d'avancée du câble électrique dans le conduit d'installation, en fonction de la température du fluide de portage.

Selon un mode de mise en oeuvre, le procédé conforme à l'invention consiste à contrôler la température du fluide de portage à l'entrée et à la sortie de du conduit d'installation, de manière à piloter en conséquence des moyens de refroidissement du fluide de portage ou à moduler la vitesse d'avancée du câble électrique dans le conduit d'installation.

Selon un mode de mis en oeuvre,le procédé conforme à l'invention dépend de la quantité d'énergie à évacuer ,si celle-ci est faible la température de l'eau varie peu car la quantité d'eau utilisée pour réaliser le portage est telle et tel est son pouvoir calorifique qu'un test manuel, tel qu'un trempé de la main dans l'eau, est suffisant pour s'assurer du niveau adéquat de la température de l'eau,ce qui est un énorme avantage pour la mise en oeuvre du procédé sur chantiers.

Selon un mode de mise en oeuvre, le procédé conforme à l'invention consiste à utiliser un câble électrique dont la densité est comprise entre 1 et 3.

Selon un mode de réalisation du dispositif conforme à l'invention, chaque chaîne est constituée d'un assemblage de maillons dont le profil extérieur présente des nervures sensiblement transversales au sens d'avancement de la chaîne, de manière à venir en prise sur le câble électrique.

Selon un mode de réalisation du dispositif conforme à l'invention, les nervures sont en aluminium.

Selon un mode de réalisation du dispositif les nervures présentent un profil sensiblement semi-cylindrique de manière à augmenter leur surface de contact avec le câble électrique.

Selon un mode de réalisation du dispositif conforme à l'invention, les nervures présentent, dans le sens d'avancée de la chaîne, un profil dont section transversale comporte respectivement une face arrière pentue, un sommet plat, et une face avant abrupte ou verticale.

Selon un mode de réalisation du dispositif conforme à l'invention, les nervures présentent une hauteur de 1 à 2mm.

Selon un mode de réalisation du dispositif conforme à l'invention, l'unité de poussage est apte à entraîner un câble de section transversale circulaire ou un assemblage de trois câbles torsadés.

Selon un mode de réalisation du dispositif conforme à l'invention, il comprend trois unités de poussage disposées l'une dernière l'autre pour faire avancer le câble électrique ou l'assemblage de câbles.

Selon un mode de réalisation du dispositif conforme à l'invention, il comprend des moyens pour piloter et synchroniser la vitesse de circulation des chaînes avec la vitesse de rotation correspondant au déroulement de câble du touret.

Selon encore un mode de réalisation, le dispositif comprend en outre un organe d'admission du fluide de portage comportant un organe d'étanchéité et le conduit d'installation est un câble torsadé, l'organe d'étanchéité étant traversé par le câble pour constituer une cloison étanche au fluide de portage et étant entraîné en rotation par ce câble lors du déplacement dudit câble.

Encore selon un autre mode de réalisation, l'organe d'étanchéité comprend un joint d'étanchéité comportant une fenêtre muni d'au moins deux lobes de forme complémentaire au contour extérieur du câble torsadé.

Le procédé d'installation de câbles électriques conforme à l'invention présente l'avantage de diminuer substantiellement le coût global d'une telle installation. En effet, le câble électrique qui est disposé dans le sol est protégé mécaniquement et électriquement par le conduit d'installation et il n'est donc pas nécessaire de prévoir une gaine spécifique ou une gaine renforcée sur le câble électrique lui-même.

En outre, il est possible avec le même procédé que celui utilisé lors de l'installation du câble, de retirer ce dernier du conduit d'installation afin d'y installer un câble différent, par exemple de puissance différente. Il est ainsi possible pour un même utilisateur ou un même quartier urbain de dimensionner l'alimentation électrique sans avoir à creuser de nouvelles tranchées ou d'installer des câbles électriques supplémentaires de fortes puissances.

D'autres avantages ressortiront également de la description détaillée donnée ci-après en référence aux dessins annexés dans lesquels :
la figure 1 est une section transversale de câble électrique installé dans un conduit d'installation, conformément à l'invention,
la figure 2 est un exemple d'assemblage de trois conduits d'installation groupés sous gaine, l'ensemble étant susceptible d'être installé dans une tranchée conformément à l'invention,
la figure 3 est une schématisation du procédé d'une partie des étapes du procédé conforme à l'invention,
la figure 4 représente une machine susceptible de mettre en oeuvre certaines étapes du procédé conforme à l'invention,
la figure 5 est une représentation schématique de la mise en oeuvre du procédé conforme à l'invention,
la figure 6 représente un détail du dispositif permettant de mettre en oeuvre le procédé conforme à l'invention,
la figure 7 est une représentation schématique et partielle du moyen de poussage du dispositif de la figure 6,
les figures 8 et 9 sont respectivement des vues en perspective et de dessus d'un maillon d'une chaîne du moyen de poussage de la figure 7,
la figure 10 est une vue agrandie en perspective éclatée d'une partie d'un organe d'admission de fluide de portage appartenant au dispositif représenté à la figure 6, et
les figures 11 et 12 sont respectivement des vues en perspective et en perspective éclatée d'un organe d'étanchéité de l'organe d'admission de la figure 10.

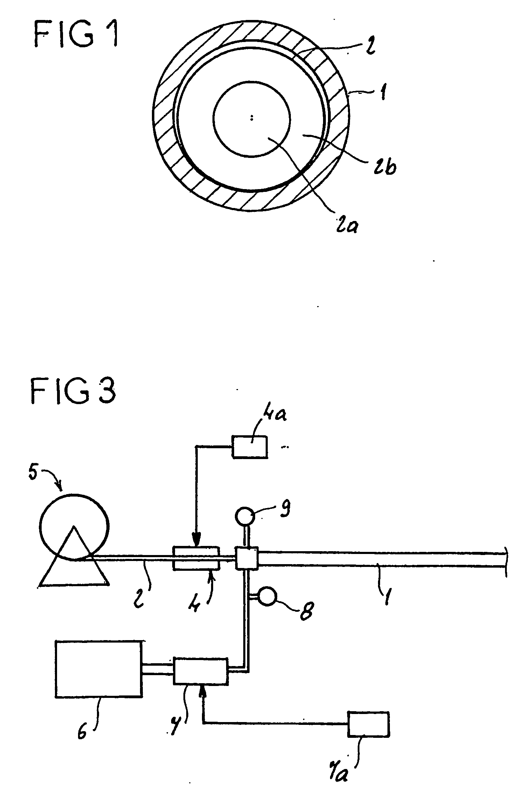

La figure 1 décrit un exemple de conduit d'installation 1 représenté en section transversale dans lequel est installé un câble électrique 2 présentant par exemple une âme conductrice 2a et une gaine extérieure isolante 2b. Le conduit d'installation 1 est réalisé avec un tube rainuré ou lisse et peut être, le cas échéant, lubrifié. Pour l'installation de câbles électriques 2 d'énergie, il convient d'avoir entre le diamètre extérieur du câble électrique 2 et le diamètre interne du conduit d'installation 1 un ratio compris entre 1,2 et 1,6. Les caractéristiques d'élongation thermique des câbles 2 et des contraintes liées aux méthodes de pose desdits câbles imposent un tel ratio.

Le conduit d'installation 1 peut également être constitué de trois tubes 1a, 1b, 1c rassemblés dans une gaine externe 3, tel que cela est représenté à la figure 2. Chacun des tubes 1 a, 1b, 1c peut ainsi être pourvu d'un câble électrique 2 cylindrique monophasé. L'assemblage des câbles monophasés permet ainsi de réaliser des câbles électriques 2 triphasés de fortes ou moyennes puissances qui peuvent ainsi être installés dans le sol avec des techniques et des moyens utilisés pour installer des câbles monophasés cylindriques.

Il n'y a donc pas de surcoût au niveau du matériel d'installation. On conserve également une configuration en trèfle du positionnement des phases. En outre, l'introduction de câbles 2 monopolaires (cylindriques) peut se faire sur des distances d'installation de l'ordre de 2,5 km, c'est-à-dire beaucoup plus importantes que les distances d'installation obtenues avec un câble 2 tripolaire ou torsadé. L'étanchéité du système d'introduction du câble 2 est également bien assurée lorsque ledit câble 2 présente une section transversale circulaire. L'étanchéité est en effet nécessaire lorsque l'on utilise un fluide de portage sous pression. La gaine externe 3, par exemple thermoformée, sert à la cohésion mécanique de l'ensemble ainsi constitué.

Conformément à l'invention, il est aussi possible d'installer un câble électrique torsadé, véhiculant un courant triphasé, dans le conduit d'installation 1 représenté à la figure 1, en lieu et place du câble électrique 2 cylindrique.

L'installation de câbles électriques 2 dans un conduit d'installation 1 permet de protéger ces derniers contre les agressions mécaniques de par les propriétés mécaniques dudit conduit d'installation 1, à savoir une tenue au poinçonnement, à l'écrasement et en traction. Ainsi ce n'est pas au câble électrique 2 d'intégrer les propriétés de protection comme c'est le cas pour les câbles qui sont enfouis directement dans le sol. Les câbles électriques, installés selon le procédé conforme à l'invention, peuvent ainsi présenter un diamètre plus faible et être enroulés sur des tourets de diamètre réduit. Les coûts de fabrication et de transport en sont allégés par la même occasion.

La figure 3 représente un schéma de principe d'installation d'un câble électrique dans un conduit d'installation.

Le dispositif pour mettre en oeuvre le procédé conforme à l'invention comprend également des moyens de poussage 4 permettant de pousser le câble électrique 2 à l'intérieur du conduit d'installation 1. Les moyens de poussage sont pilotés par une unité de commande 4a, laquelle permet également de contrôler la vitesse d'avancée du câble, de même que la force de poussage appliquée audit câble électrique 2. L'unité de commande 4a permet de synchroniser la vitesse d'avancée des câbles 2 avec la vitesse de rotation correspondant au déroulement du câble 2 d'un touret 5. Le dispositif conforme à l'invention comprend également un réservoir 6 contenant un fluide de portage, en l'occurrence de l'eau 6a. Une pompe 7 permet d'injecter l'eau à l'intérieur du conduit d'installation 1 comprise entre 10 et 16 bars. La circulation de l'eau dans le conduit d'installation 1 entraîne le câble 2 de par sa friction sur la gaine extérieure du câble électrique 2, dans le conduit d'installation 1 sur une certaine distance, appelée distance d'installation.

A titre d'exemple, avec une pression d'eau de 13 bars et une force de poussage exercée par les moyens de poussage d'environ 170 daN, on peut installer un câble d'énergie (moyenne tension) présentant par exemple un poids par unité de longueur de 1,6 Kg/m sur une distance de 1 700 mètres à raison d'une vitesse de 20 mètres par minute.

La pompe 7 est pilotée par un moyen de commande supplémentaire 7a pour ajuster la pression d'eau. Des manomètres 8 et 9 permettent de mesurer respectivement le débit d'eau ainsi que la pression d'eau dans le conduit d'installation 1.

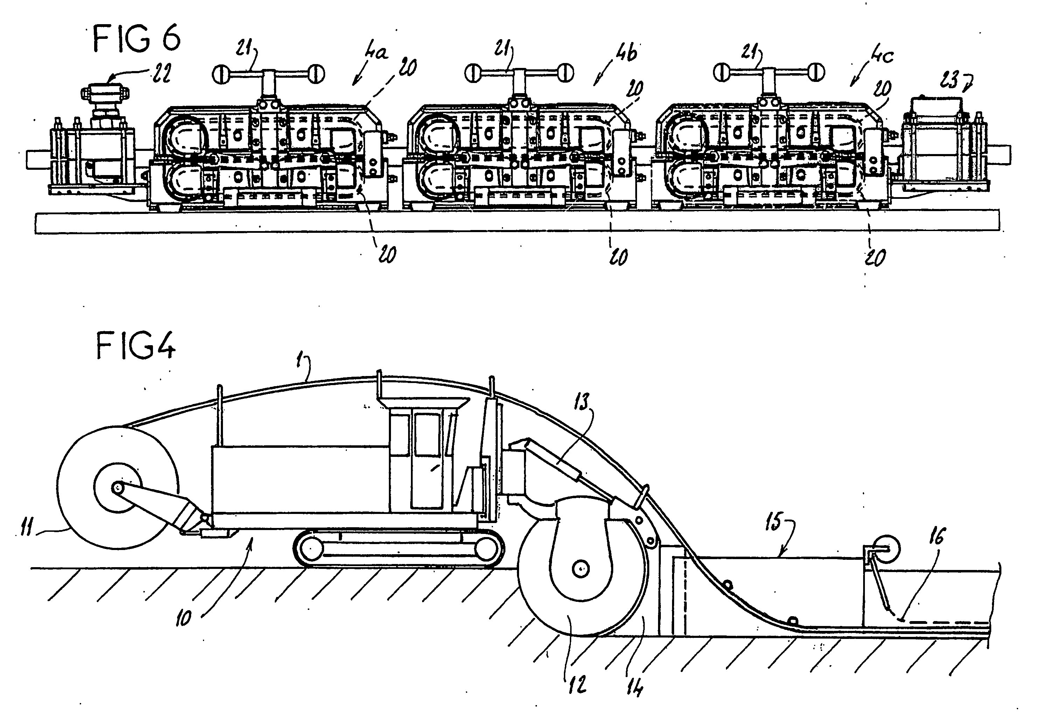

Les figures 3 et 4 schématisent des exemples de réalisation de moyens permettant de mettre en oeuvre les étapes du procédé conformes à l'invention.

Lorsque le conduit d'installation 1 est posé par l'intermédiaire d'une machine 10 telle que représentée à la figure 4, on installe dans ledit conduit d'installation 1, le câble électrique 2 en utilisant les moyens schématisés à la figure 3.

La machine 10 permettant de déposer un conduit d'installation 1 dans le sol est de préférence auto-motrice et comporte un rouleau 11 sur lequel est stocké et enroulé le conduit d'installation 1.

La machine 10 est pourvue d'une roue 12 articulée à l'aide d'un vérin 13 sur la machine 10, pour creuser une tranchée 14 au fur et à mesure de l'avancée de la machine 10.

Un caisson de guidage 15 permet de déposer le conduit d'installation 1 au fond de la tranchée 14. Le conduit d'installation 1 est avantageusement recouvert d'un film ou d'un filet 16 avertisseur par tout dispositif connu monté sur le caisson de guidage 15, avant le remblaiement de la tranchée 14. Parmi les autres moyens de repérages l'un, qui est peu coûteux consiste à remplacer la gaine d'assemblage des 3 tubes qui est noire, par une gaine de couleur rouge évitant ainsi l'achat et la pose d'un grillage avertisseur.

Des moyens de remblaiement (non représentés) sont également solidaires de la machine 10 et avancent avec cette dernière. Le conduit d'installation 1 est ainsi déposé dans le sol avec un seul passage de la machine 10 mettant en oeuvre toutes les opérations de génie civil.

La machine 10 dispose notamment de moyens pour évacuer les matériaux issus de la tranchée 14, ainsi que des moyens de traitement, permettant par exemple de concasser lesdits matériaux, avant de les transférer vers l'arrière pour remblayer la tranchée 14 dans laquelle repose désormais le conduit d'installation 1. Lorsque le conduit d'installation 1 est déposé dans le sol, on peut ensuite y installer un câble électrique 2. On dispose à cet effet du touret 5 sur lequel est enroulé le câble électrique 2.

La figure 5 schématise de façon globale la mise en place ou l'installation d'un câble électrique 2 à l'intérieur d'un conduit d'installation 1, lequel est par exemple déjà déposé dans le sol par tous moyens connus. Une pompe 7 permet d'injecter une eau 6a sous pression dans le conduit d'installation 1 tel que cela est schématisé par la flèche E. L'eau 6a constituant le fluide de portage est expulsé selon la flèche S après une distance d'installation prédéterminée. On dispose ensuite d'une nouvelle pompe 7, alimentée le cas échéant par un autre réservoir 6, pour injecter à nouveau de l'eau suivant la flèche E dans un nouveau tronçon du conduit d'installation 1. Ceci peut éventuellement se répéter à plusieurs reprises pour obtenir une distance d'installation la plus grande possible pour le câble électrique 2.

L'injection d'eau 6a dans le conduit d'installation 1 se fait par des puits d'accès 11 disposés entre chaque tronçon d'installation, lequel peut s'étendre sur une distance d'environ 2,5 km.

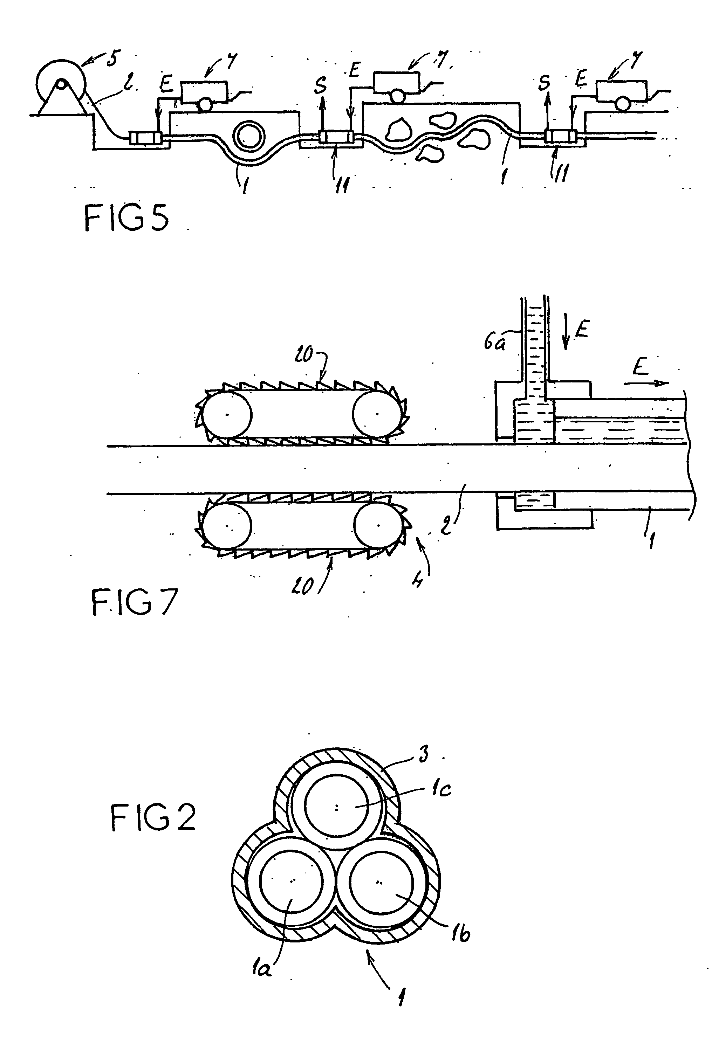

Le dispositif permettant de mettre en oeuvre le procédé conforme à l'invention comprend les moyens de poussage 4, lesquels comportent des chaînes 20, tel que cela est schématisé à la figure 7. Ces chaînes 20 sont disposées de part et d'autre du câble électrique 2 et exercent sur ce dernier la force de poussage nécessaire à son avancée dans le conduit d'installation 1. La poussée exercée par ces chaînes 20 sur le câble électrique 2 complète par conséquent l'action du fluide de portage dans le conduit d'installation 1. Dans le but de protéger la gaine extérieure du câble 2, la pression latérale de chaîne 20 doit être aussi uniforme que possible. Cette dernière est obtenue en répartissant l'effort de poussée sur deux ou plusieurs unités de poussage identiques, le nombre de celles-ci variant en fonction de l'effort total requis.

A titre d'exemple, les moyens de poussage 4 comprennent trois unités de poussage 4a, 4b, 4c, associées en série et dans lesquelles passe le câble électrique 2 lorsqu'il est déroulé de son touret 5. Chacune des unités de poussage 4a, 4b, 4c est pourvue de chaînes 20 et d'un volant 21 permettant d'ajuster le serrage desdites chaînes 20 sur le câble électrique 2. La mise en série, par exemple de trois unités de poussage 4a, 4b, 4c, présentant un serrage précontraint assurant une pression radiale prédéterminée des chaînes 20, à l'aide du volant 21, permet d'absorber des variations inévitables de diamètre extérieur du câble 2 dues à leur fabrication. On évite aussi un patinage des chaînes affectant les performances d'installation.

Un organe d'admission d'eau 22 est également prévu à l'entrée du conduit d'installation 1, de même qu'un compteur 23 permettant d'enregistrer la distance de câble déroulée à partir du touret 5 tel que schématisé à la figure 6.

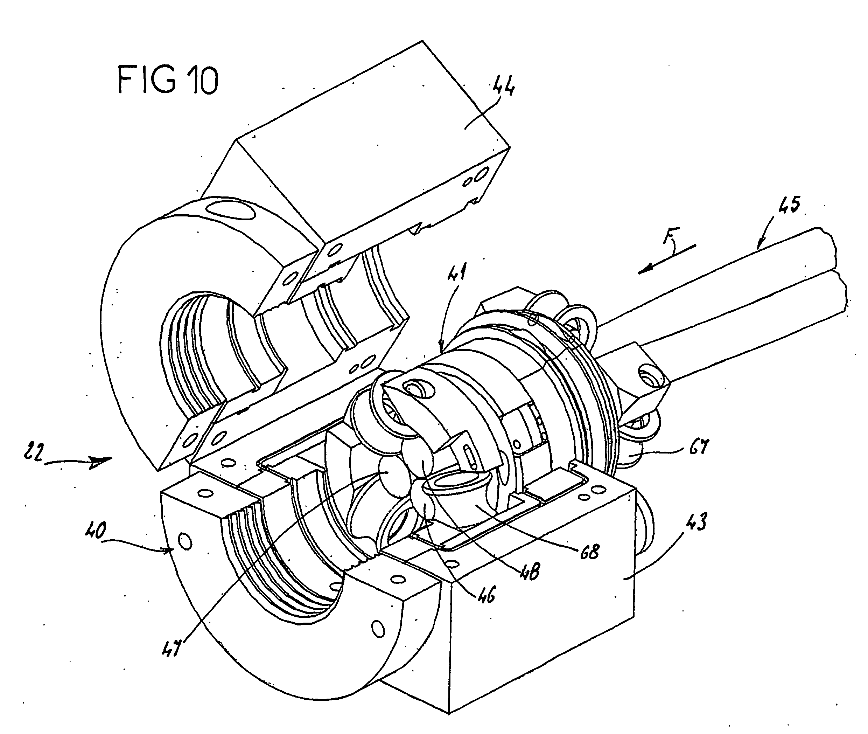

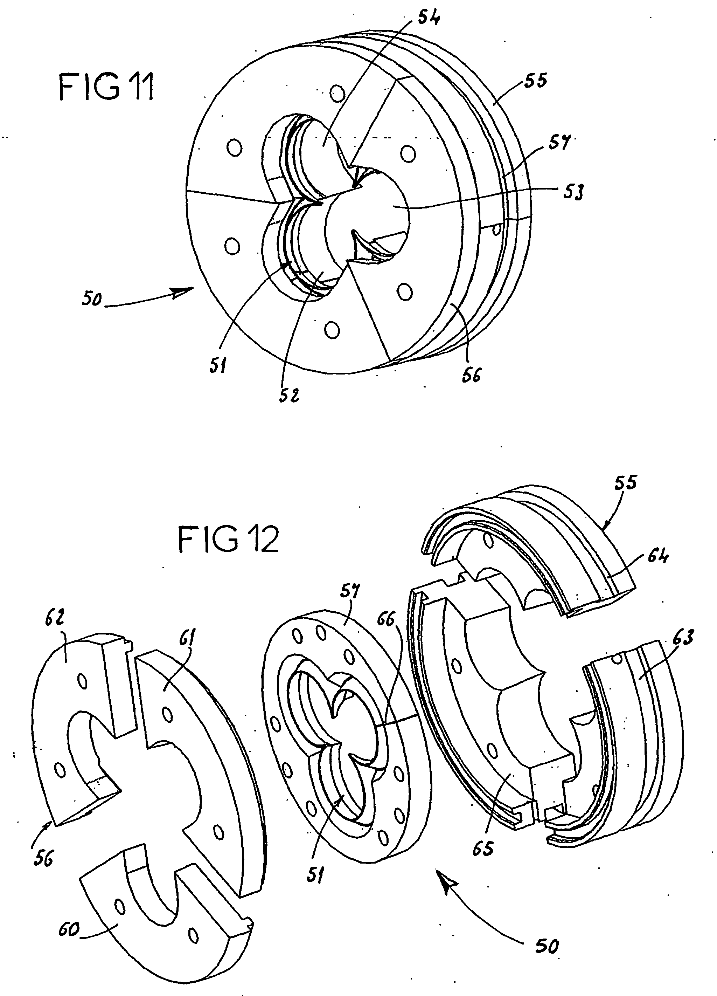

L'organe d'admission 22 de fluide de portage tel que de l'eau est plus particulièrement représenté aux figures 10 à 12. Cet organe comporte une enveloppe fixe 40 et un corps tournant 41 monté mobile en rotation à l'intérieur de l'enveloppe fixe.

L'enveloppe fixe 40 est constituée de deux demi-coquilles 43 et 44 qui définissent ensemble un cylindre creux dans lequel est logé à rotation le corps tournant 41. Le corps 41 prend lui-même la forme d'un corps cylindrique qui est traversé dans le sens longitudinal par le conduit d'installation 1. Ce conduit est par exemple un câble électrique 45 en forme de torsade constitué de trois branches 46 à 48 ou phases. En variante, ce câble pourrait être constitué de deux phases formant également une torsade.

Le fluide de portage est admis dans l'enveloppe fixe 40 par un orifice d'entrée non représenté. Afin d'éviter que le fluide de portage ne fuit vers l'extérieur de l'enveloppe fixe 40, en dehors du dispositif, le corps tournant 41 comprend un organe d'étanchéité 50 immobilisé transversalement à la direction du câble 45 en formant une cloison d'étanchéité.

Cet organe d'étanchéité 50 est de forme annulaire et possède une fenêtre 51 qui est traversée par le câble 45. Cette fenêtre est de forme complémentaire au contour extérieur de la torsade. Lorsque le câble est constitué de trois branches, la fenêtre possède trois lobes 52 à 54 qui sont chacun traversés par l'une des branche 46 à 48.

L'organe d'étanchéité 50 est formé de deux flasques rigides 55 et 56 et d'un joint d'étanchéité 57 qui est pris en sandwich entre ces deux flasques. Les flasques et le joint s'étendent selon un plan sensiblement transversal à la direction du câble. Le joint d'étanchéité 57 est appliqué de façon étanche sur la torsade du câble et est réalisé en caoutchouc ou encore en toute matière connue pour joint dynamique, tandis que les deux flasques 55 et 56 sont en réalisés en alliage d'aluminium.

Chacun des flasques est respectivement constitué de trois parties 60 à 62 et 63 à 65 pour faciliter leur montage autour du câble 45. Le joint d'étanchéité 57 est pourvu d'une fente 66 permettant son introduction par déformation sur le câble.

Le corps tournant 41 est par ailleurs muni de deux séries de galets 67 et 68 chacune placée à l'entrée et à la sortie du corps (par rapport au sens de déplacement du câble F). Chaque galet est appliqué sur l'une des branches 46 à 48 du câble pour maintenir l'angle du pas de l'hélice définie par la torsade du câble.

L'organe d'étanchéité 50 est entraîné en rotation par le câble 45 lorsque ce câble se déplace selon le sens de la flèche F. Le corps tournant 41, solidaire de cet organe, est également entraîné en rotation de sorte que l'étanchéité est obtenue de manière simple.

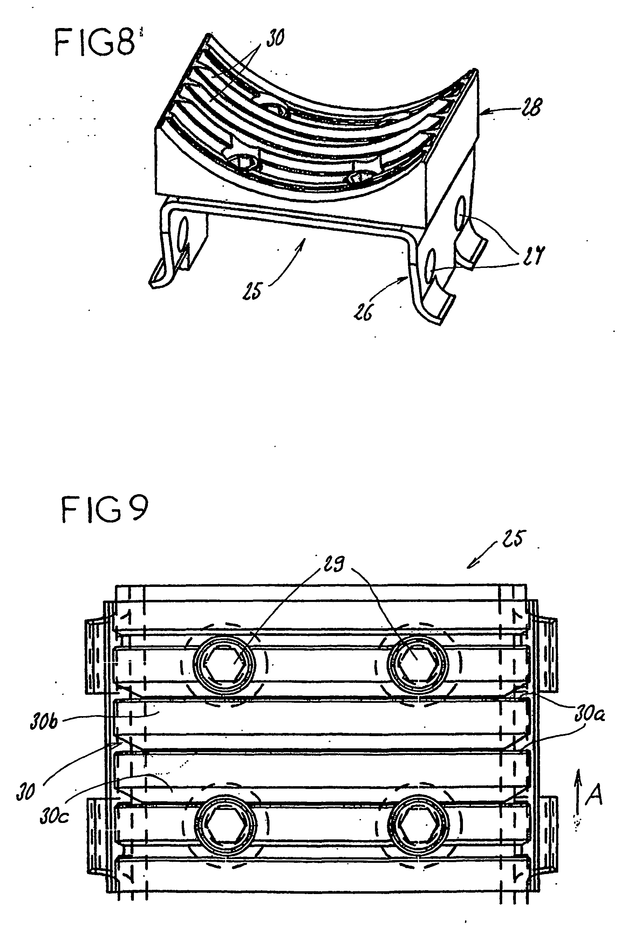

La chaîne 20 est constituée d'un assemblage de maillons 25, représentés en figure 8 et 9. Chaque maillon 25 est constitué d'une partie en acier 26 destiné à la liaison entre lesdits maillons 25. Des perçages 26 et/ou autres moyens connus en tant que tels sont prévus pour relier entre eux lesdits maillons 25. Chaque maillon 25 comporte également une partie supérieure 28, par exemple en aluminium, et montée sur la partie en acier 26 par l'intermédiaire de vis 29. La partie supérieure 28 présente extérieurement, c'est-à-dire du côté venant en prise sur le câble électrique 2 des nervures 30 sensiblement transversales. Ces dernières obtenues par exemple par moulage présentent une hauteur d'environ 1 à 2mm, et viennent en prise sur la gaine extérieure du câble électrique 2. Les nervures 30 présentent dans le sens de circulation de la chaîne 20, une forme particulière, à savoir une face avant sensiblement abrupte 30a, un sommet sensiblement plat 30b ainsi qu'une face arrière 30c à pente douce comparativement à sa face avant 30a. Le sens de circulation des chaînes 20 et par conséquent des nervures 30 est schématisé par la flèche A sur la figure 9. Ce sont donc les parties avant 30a sensiblement pentues qui attaquent la gaine extérieure du câble électrique 2.

Une telle conformation de même qu'une dimension relativement réduite desdites nervures 30 permet d'éviter une blessure dommageable de la gaine des câbles électriques 2. Les nervures 30 présentent avantageusement en section transversale de la partie supérieure 28 un profil semi-cylindrique dont le diamètre est adapté au diamètre extérieur des câbles électriques 2. Ces derniers sont ainsi enserrés de façon optimale sur une plus grande surface et le risque de patinage est sensiblement réduit. Pour installer un assemblage de câbles électriques 2 sous forme triangulaire ou torsadée dans un conduit d'installation 1, le dispositif de poussage comporte non pas 2 bandes d'entrainement mais trois disposées à 120° et chacune des bandes utilisant des dents d'entrainements planes et non pas semi cylindriques .

Lorsque des câbles électriques 2 de forte ou moyenne puissances sont engagés dans des conduits d'installation 1, conformément à l'invention, lesdits câbles électriques 2 ont tendance de par leur poids par unité de longueur relativement élevé à s'étendre dans la partie la plus basse du conduit d'installation 1 et frotter contre ce dernier. Le volume libre disponible pour la circulation de l'eau 6a, c'est-à-dire le fluide de portage, est ainsi plus important au-dessus du câble électrique 2 qu'en dessous. On obtient par conséquent un différentiel de vitesse et de pression entre l'espace libre situé respectivement au-dessus et en dessous du câble électrique 2. Ce dernier frotte par conséquent sur la paroi inférieure du conduit d'installation 1 dès que la densité dudit câble est supérieure à 1, ce qui est toujours le cas pour des câbles électriques de moyenne et de forte puissances. Il en résulte un frottement entre la gaine extérieure dudit câble électrique 2 et le conduit d'installation 1 qui peut détériorer la gaine extérieure du câble 2. Le différentiel de pression que l'on obtient dans le conduit 1 entre l'espace libre supérieur et l'espace libre inférieur entourant le câble électrique 2, provoque un centrage dudit câble électrique 2 qui permet le passage de l'eau 6a sous ledit câble 2 au moins par intermittence. Le passage de l'eau dans cet espace libre inférieur relativement étroit permet de refroidir les parties en contact par frottement, ce qui a pour conséquence de réduire substantiellement le coefficient de frottement.

Il a en effet été observé qu'un passage de la température de 20°C à 40°C dans les zones de contact de friction, augmente le coefficient de frottement de 20%. La circulation de l'eau 6a comme fluide de portage permet ainsi également de maintenir la température des parties en contact respectivement du câble électrique 2 et du conduit d'installation 1 en deçà de certaines valeurs. On évite ainsi une augmentation du coefficient de frottement. Il est intéressant, dans le cadre du procédé conforme à l'invention de prévoir des moyens de refroidissement du liquide de portage en l'occurrence l'eau 6a et le cas échéant des moyens de contrôle de sa température pour piloter lesdits moyens de refroidissement.

Les moyens particuliers pour mesurer la température et la localisation des points de mesure peuvent également s'envisager spécialement en fin de longueur de pose ou en milieu de parcours d'installation dans le cas de presence de chambre d'accès au réseau.

Le procédé conforme à l'invention présente l'avantage qu'il permet de conserver une vitesse d'installation (avancée du câble 2 dans le conduit 1) relativement soutenue, grâce au contrôle du coefficient de frottement par l'intermédiaire d'une mesure de températures. La circulation de l'eau 6a permet également d'évacuer les charges électrostatiques apparaissant dans le conduit 1 lors de l'installation du câble électrique 2

## Revendications

1. Procédé d'installation d'un câble électrique (2) comprenant au moins un élément monophasé comportant une âme conductrice (2a) et une gaine extérieure isolante (2b), supportant une tension électrique au moins égale à 1000 V, et présentant un poids linéaire élevé, au moins égal à 0,5 kg/m, procédé selon lequel :
a) on dispose dans le sol d'au moins un conduit d'installation (1), dont le diamètre interne est déterminé en sorte que le ratio entre le diamètre extérieur du câble (2) et le diamètre interne du conduit d'installation est compris entre 1,2 et 1,6,
b) on pousse le câble (2) dans le conduit d'installation, du côté de l'entrée dudit câble dans ledit conduit, avec au moins un organe de poussage en prise sur sa gaine extérieure,
c) on injecte un fluide comprenant de l'eau (6a) sous pression dans le conduit d'installation (1), en ménageant une étanchéité avec le câble en cours de poussage, la densité du câble (2) par rapport au fluide étant supérieure à 1, par exemple comprise entre 1 et 3, l'injection du fluide étant ajustée en relation avec le poussage du câble, en sorte que l'eau (6a) soit utilisée comme fluide de centrage, au moins par intermittence, et comme fluide d'évacuation de l'énergie thermique résultant des forces de frottement entre ledit câble (2) et le conduit d'installation (1).

2. Procédé selon la revendication 1, **caractérisé en ce que**, d'une part le conduit d'installation (1) comprend trois tubes (1a, 1b, 1c) rassemblés dans une gaine externe (3), et d'autre part le câble électrique (2) triphasé comprend trois câbles monophasés disposés dans les trois tubes respectivement.

3. Procédé selon la revendication 1, **caractérisée en ce que** le câble électrique (2) est torsadé.

4. Procédé selon la revendication 1, **caractérisé en ce que**, pour disposer du conduit d'installation, on creuse une tranchée (14), on évacue les matériaux issus de la tranchée, on dépose le conduit d'installation dans la tranchée, et on remblaye la tranchée.

5. Procédé selon la revendication 1, **caractérisée en ce que** l'on contrôle la température du fluide, par exemple avec des moyens de refroidissement.

6. Procédé selon la revendication 5, **caractérisé en ce que** l'on contrôle la température du fluide de portage à l'entrée et à la sortie du conduit d'installation (1), de manière à piloter en conséquence des moyens de refroidissement du fluide, ou à moduler la vitesse d'avancée du câble électrique (2) en cours de poussage dans le conduit d'installation.

7. Dispositif pour la mise en oeuvre du procédé selon l'une quelconque des revendications 1 à 6, comportant :
- des moyens pour creuser une tranchée (14), avec des moyens pour dérouler le conduit d'installation (1),
- des moyens de poussage (4) du câble électrique (2) dans le conduit d'installation (1), comprenant au moins une unité de poussage (4a, 4b, 4c) comportant deux chaînes (20) superposées tournant en sens inverse, et enserrant le câble électrique (2), de manière à le pousser dans le conduit d'installation,
- des moyens pour injecter le fluide dans le conduit d'installation (1), comportant un organe d'admission (22) dudit fluide et un organe d'étanchéité (50) avec le câble (2) en cours de poussage.

8. Dispositif selon la revendication 7, **caractérisé en ce que** les moyens de poussage (4) comprennent trois unités de poussage (4a, 4b, 4c) associées en série, disposées l'une derrière l'autre pour faire avancer le câble électrique (2).

9. Dispositif selon la revendication 7, **caractérisé en ce que** chaque chaîne (20) de l'unité de poussage est constituée d'un assemblage de maillons (25) dont le profil extérieur présente des nervures (30) sensiblement transversales au sens d'avancement de la chaîne (20), de manière à venir en prise sur le câble électrique (2).

10. Dispositif selon la revendication 9, **caractérisé en ce que** les nervures (30) présentent une forme sensiblement semi-cylindrique de manière à augmenter leur surface de contact avec le câble électrique (2).

11. Dispositif selon la revendication 9, **caractérisé en ce que** les nervures (30) présentent, dans le sens d'avancée de la chaîne (20), un profil dont la section transversale comporte respectivement une face arrière pentue (30c), un sommet plat (30b), et une face avant abrupte ou verticale (30a).

12. Dispositif selon l'une quelconque des revendications 7 à 11, **caractérisé en ce que** les moyens de poussage (4) sont aptes à entraîner un câble (2) de section transversale circulaire ou un assemblage de trois câbles torsadés.

13. Dispositif selon la revendication 7, **caractérisé en ce qu'**il comprend des moyens pour piloter et synchroniser la vitesse de circulation des chaînes (20) de l'unité de poussage (4a, 4b, 4c) avec la vitesse de rotation correspondant au déroulement du câble électrique (2) disposé sur un touret (5).

14. Dispositif selon la revendication 7, le câble installé étant un câble torsadé (45), l'organe d'étanchéité étant agencé pour être traversé par le câble et pour constituer une cloison étanche au fluide de portage, et étant entraîné en rotation par ce câble lors du déplacement dudit câble.

15. Dispositif selon la revendication 14, **caractérisé en ce que** l'organe d'étanchéité (50) comprend un joint d'étanchéité (57) comportant une fenêtre (51) muni d'au moins deux lobes (52, 53) de forme complémentaire au contour extérieur du câble torsadé (45).

## Patentansprüche

1. Verfahren zur Installation eines elektrischen Kabels (2), das zumindest ein einphasiges Element aufweist, das einen leitenden Kern (2a) und eine äußere isolierende Hülle (2b) aufweist, das eine elektrische Spannung von zumindest 1.000 V verträgt und das ein erhöhtes Lineargewicht von zumindest 0,5 kg/m aufweist, wobei das Verfahren folgende Schritte aufweist:
a) es wird im Boden zumindest ein Installationskanal (1) angeordnet, dessen innerer Durchmesser so festgelegt ist, dass das Verhältnis zwischen dem äußeren Durchmesser des Kabels (2) und dem inneren Durchmesser des Installationskanals bei 1,2 bis 1,6 liegt,
b) das Kabel (2) wird von der Eintrittsseite des Kabels in das Rohr in den Installationskanal eingeschoben, und zwar mittels zumindest einer Vorschubeinheit, die im Eingriff mit dem äußeren Mantel steht,
c) ein Fluid, das Wasser (6a) aufweist, wird unter Druck in den Installationskanal (1) eingespritzt, wobei während des Vorschiebens die Dichtheit mit dem Kabel sichergestellt wird, wobei die Dichte des Kabels (2) im Vergleich mit dem Fluid größer als 1 ist, und bspw. bei 1 bis 3 liegt, und wobei das Einspritzen des Fluids in Bezug auf das Vorschieben des Kabels so eingestellt wird, dass das Wasser (6a) zumindest zeitweise als zentrierfluid und als Fluid zum Abführen der thermischen Energie verwendet wird, die aus den Reibungskräften zwischen dem Kabel (2) und dem Installationskanal (1) entsteht.

2. Verfahren nach Anspruch 1, **dadurch gekennzeichnet, dass** zum einen der Installationskanal (1) drei Röhren (1a, 1b, 1c) aufweist, die in einem äußeren Mantel (3) zusammengefasst sind, und dass zum anderen das dreiphasige elektrische Kabel (2) drei einphasige Kabel aufweist, die jeweils in den drei Röhren angeordnet sind.

3. Verfahren nach Anspruch 1, **dadurch gekennzeichnet, dass** das elektrische Kabel (2) verdrillt ist.

4. Verfahren nach Anspruch 1, **dadurch gekennzeichnet, dass** zum Anordnen des Installationskanals ein Graben (14) gegraben wird, die Materialien, die aus dem Graben stammen, entfernt werden, der Installationskanal in dem Graben angeordnet wird und der Graben aufgefüllt wird.

5. Verfahren nach Anspruch 1, **dadurch gekennzeichnet, dass** die Temperatur des Fluids z.B. mit Mitteln zum Kühlen geregelt wird.

6. Verfahren nach Anspruch 5, **dadurch gekennzeichnet, dass** die Temperatur des Trägerfluids am Eingang und am Ausgang des Installationskanals (1) gemessen wird, um in Abhängigkeit davon die Mittel zum Kühlen des Fluids zu steuern oder die Vorwärtsgeschwindigkeit des elektrischen Kabels (2) während des Vorschiebens in dem Installationskanal zu verändern.

7. Vorrichtung zum Durchführen des Verfahrens gemäß einem der Ansprüche 1 bis 6, die Folgendes aufweist:
- Mittel zum Graben eines Grabens (14), mit Mitteln zum Abrollen des Installationskanals (1),
- Mittel zum Vorschieben (4) des elektrischen Kabels (2) in dem Installationskanal (1), die zumindest eine Vorschubeinheit (4a, 4b, 4c) aufweisen, die zwei tibereinander angeordnete Ketten (20) aufweist, die sich in entgegengesetzte Richtung drehen und die das elektrische Kabel (2) erfassen und zwar in einer Weise, um dieses in dem Installationskanal vorzuschieben,
- Mittel zum Einspritzen des Fluids in den Installationskanal (1), die eine Einlasseinheit (22) für dieses Fluid und eine Dichtungseinheit (50) mit dem Kabel (2) während des Vorschiebens aufweisen.

8. Vorrichtung nach Anspruch 7, **dadurch gekennzeichnet, dass** die Mittel zum Vorschieben (4) drei Einheiten zum Vorschieben (4a, 4b, 4c) aufweisen, die miteinander in Serie verbunden und hintereinander angeordnet sind, um das elektrische Kabel (2) vorwärts zu bewegen.

9. Vorrichtung nach Anspruch 7, **dadurch gekennzeichnet, dass** jede Kette (20) der Einheit zum vorschieben aus einem Zusammenbau von Kettengliedern (25) gebildet wird, deren äußeres Profil Rippen (30) aufweist, die im Wesentlichen quer zur Vortriebsrichtung der Kette (20) angeordnet sind, und zwar in einer Weise, um mit dem elektrischen Kabel (2) in Eingriff zu treten.

10. Vorrichtung nach Anspruch 9, **dadurch gekennzeichnet, dass** die Rippen (30) eine im Wesentlichen halbzylindrische Form aufweisen, um deren Kontaktfläche mit dem elektrischen Kabel (2) zu vergrößern.

11. Vorrichtung nach Anspruch 9, **dadurch gekennzeichnet, dass** die Rippen (30) in Vortriebsrichtung der Kette (20) ein Profil aufweisen, dessen Querschnitt jeweils Folgendes aufweist, nämlich eine hintere geneigte Seite (30c), eine flache Oberseite (30b) und eine steile oder vertikale Vorderseite (30a).

12. Vorrichtung nach einem der Ansprüche 7 bis 11, **dadurch gekennzeichnet, dass** die Mittel zum vorschieben (4) dazu ausgelegt sind, ein Kabel (2) mit einem kreisförmigen Querschnitt oder einen Zusammenbau von drei verdrillten Kabeln anzutreiben.

13. Vorrichtung nach Anspruch 7, **dadurch gekennzeichnet, dass** sie Mittel zum Steuern und Synchronisieren der Umlaufgeschwindigkeit der Ketten (20) der Einheit zum Vorschieben (4a, 4b, 4c) mit der Rotationsgeschwindigkeit aufweist, die dem Abwickeln des elektrischen Kabels (2) entspricht, das auf einer Kabeltrommel (5) angeordnet ist.

14. Vorrichtung nach Anspruch 7, wobei das installierte Kabel ein verdrilltes Kabel (45) ist, und wobei die Dichtungseinheit so ausgebildet ist, dass sie von dem Kabel durchschritten wird und dass sie eine dichte Trennwand gegenüber dem Trägerfluid bildet und dass sie durch das Kabel während des Vorschiebens des Kabels in Rotation versetzt wird.

15. Vorrichtung nach Anspruch 14, **dadurch gekennzeichnet, dass** die Dichtungseinheit (50) zumindest eine Dichtung (57) aufweist, die ein Fenster (51) aufweist, in dem zumindest zwei Lappen (52, 53) einer Form ausgebildet sind, die dem äußeren Profil des verdrillten Kabels (45) entspricht.

## Claims

1. Method for installing an electrical cable (2) comprising at least one single-phase element having a conducting core (2a) and an insulating external sheath (2b), supporting an electrical voltage of at least 1000V and having a high weight per unit length of at least 0.5kg/m, method according to which:
a) at least one installation duct (1) is laid in the ground, the inside diameter of which being determined such that the ratio between the outside diameter of the cable (2) and the inside diameter of the installation duct is between 1.2 and 1.6,
b) the cable (2) is pushed into the installation duct, on the side where said cable enters said duct with at least one pushing member engaged on its external sheath,
c) a fluid, comprising pressurised water (6a), is injected into the installation duct (1) providing a seal with the cable while it is pushed along, the density of the cable (2) relative to the fluid being greater than 1, for example between 1 and 3, the injection of the fluid being adjusted relative to the thrust of the cable, such that the water (6a) is used as centring fluid, at least intermittently, and as fluid for removing the thermal energy resulting from the friction forces between said cable (2) and the installation duct (1).

2. Method according to claim 1, **characterised in that**, on the one hand, the installation duct (1) comprises three tubes (1a, 1b, 1c) joined together in an external sheath (3) and, on the other hand, the three-phase electrical cable (2) comprises three single-phase cables respectively arranged in the three tubes.

3. Method according to claim 1, **characterised in that** the electrical cable (2) is a twisted cable.

4. Method according to claim 1, **characterised in that** for laying the installation duct a trench (14) is dug, the materials from the trench are removed, the installation duct is laid in the trench and the trench is back-filled.

5. Method according to claim 1, **characterised in that** the temperature of the fluid is controlled, for example by cooling means.

6. Method according to claim 5, **characterised in that** the temperature of the carrying fluid is checked at the inlet and at the outlet of the installation duct (1) so as to control, as a result, the fluid cooling means or to modulate the rate of advance of the electrical cable (2) while it is being pushed into the installation duct.

7. Apparatus for implementing the method according to any one of claims 1 to 6, comprising:
- means for digging a trench (14) with means for unwinding the installation duct (1),
- means for pushing (4) the electrical cable (2) into the installation duct (1) comprising at least one pushing unit (4a, 4b, 4c) having two superposed chains (20) rotating in opposing directions and gripping the electrical cable (2) so as to push it into the installation duct,
- means for injecting the fluid into the installation duct (1) comprising an intake member (22) for said fluid and a sealing member (50) for sealing onto the cable (2) while it is being pushed along.

8. Apparatus according to claim 7, **characterised in that** the pushing means (4) comprise three pushing units (4a, 4b, 4c) connected in series, arranged one behind the other to advance the electrical cable (2).

9. Apparatus according to claim 7, **characterised in that** each chain (20) of the pushing unit consists of an assembly of links (25), the external profile of which having ribs (30) substantially transverse to the direction of advance of the chain (20) so as to be engaged on the electrical cable (2).

10. Apparatus according to claim 9, **characterised in that** the ribs (30) have a substantially semi-cylindrical shape so as to increase their area of contact with the electrical cable (2).

11. Apparatus according to claim 9, **characterised in that** in the direction of advance of the chain (20), the ribs (30) have a profile, the cross-section of which respectively has a sloped rear face (30c), a flat top (30b) and a steep or vertical front face (30a).

12. Apparatus according to any one of claims 7 to 11, **characterised in that** the pushing means (4) are capable of driving a cable (2) of circular cross-section or an assembly of three twisted cables.

13. Apparatus according to claim 7, **characterised in that** it comprises means for controlling and synchronising the rate of circulation of the chains (20) of the pushing unit (4a, 4b, 4c) with the rate of rotation corresponding to the unwinding of the electrical cable (2) arranged on a drum (5) .

14. Apparatus according to claim 7, the installed cable being a twisted cable (45), the sealing member being designed to be passed through by the cable and to constitute a partition which is impermeable to the carrying fluid, and being driven in rotation by this cable during the displacement of said cable.

15. Apparatus according to claim 14, **characterised in that** the sealing member (50) comprises a seal (57) having an aperture (51) provided with at least two lobes (52, 53), complementary in shape to the external outline of the twisted cable (45).
